# EUROPEAN PATENT APPLICATION

(11) **EP 4 797 036 A1**
(43) Date of publication of application: **26.08.2026**
(21) Application number: 23955897.6
(22) Date of filing: 22.11.2023
(51) Int. Cl.: G05G 1/04, G05G 1/06, A63F 13/24

(54) **MULTIDIRECTIONAL JOYSTICK ASSEMBLY**

(30) Priority: 20.10.2023 CN 202322843357 U
(71) Applicant: Shenzhen Guli Technology Co., Ltd., Shenzhen, Guangdong 518000 (CN)
(72) Inventor: YU, Hongyong, Shenzhen, Guangdong 518000 (CN); HUANG, Jingzhuo, Shenzhen, Guangdong 518000 (CN)
(74) Representative: Metida
(86) International application number: PCT/CN2023/133359
(87) International publication number: WO 2025/081579

(57) **Abstract**

A multidirectional joystick assembly, comprising a base, a joystick, a first supporting beam, and a second supporting beam. The first supporting beam and the second supporting beam are movably arranged on the base; the bottom of the joystick is connected to the crossed assembling position of the first supporting beam and the second supporting beam, and the joystick can drive the first supporting beam or the second supporting beam to swing back and forth, and one end of the first supporting beam and one end of the second supporting beam are each provided with a magnetic block.

## Description

### TECHNICAL FIELD

The present application relates to the technical field of electronic external devices, and in particular, to a multidirectional joystick assembly.

### BACKGROUND

Joysticks are widely used in input devices such as game controllers, operating handles, and gear shift components. A joystick is certainly not just a single swingable rod, but a series of components that coordinate to achieve functions of swinging, rebounding, and signal output. The joystick assembly includes many parts, some of which have complex structures. To ensure a good operating feel, be less prone to damage, and be easy to manufacture, the structure of the parts in the joystick assembly requires continuous improvement. For example, in an existing joystick assembly, two movable swing arms with magnets mounted on the X-axis and the Y-axis are key components to ensure resetting of the joystick or generation of position signals. Dimensional requirements for the two parts are particularly strict during actual production, resulting in a high production reject rate, low production efficiency, and consequently higher costs.

### SUMMARY

Based on this, there is a need to provide a multidirectional joystick assembly with respect at least one of the above problems.

The present application provides a multidirectional joystick assembly, including a base, a joystick, a first supporting beam, and a second supporting beam; wherein the first supporting beam and the second supporting beam are movably arranged on the base;
the bottom of the joystick is connected to the crossed assembling position of the first supporting beam and the second supporting beam, and the joystick is capable of driving the first supporting beam or the second supporting beam to swing back and forth; and
one end of the first supporting beam and one end of the second supporting beam are each provided with a magnetic block.

In an embodiment, the first supporting beam includes a first connecting portion, a first supporting portion, and a second supporting portion, the first supporting portion and the second supporting portion being respectively arranged on two opposite sides of the first connecting portion; and the second supporting beam includes a second connecting portion, a third supporting portion, and a fourth supporting portion, the third supporting portion and the fourth supporting portion being respectively arranged on two opposite sides of the second connecting portion; the first connecting portion and the second connecting portion being crossed and assembled.

In an embodiment, a mounting groove is provided on a top end face of the first connecting portion; the second connecting portion is provided with a snap-fit groove, the second connecting portion is crossed and assembled with the first connecting portion through the snap-fit groove, a through hole is provided in the bottom of the snap-fit groove, and the bottom of the joystick is disposed in the mounting groove through the through hole.

In an embodiment, connecting lugs are further provided on the top end face of the first connecting portion on two opposite sides of the mounting groove, and the joystick is capable of abutting against inner side faces of the connecting lugs.

In an embodiment, a bottom end face of the first connecting portion is an arc-shaped surface, and the base is provided with a support groove matching the bottom end face of the first connecting portion.

In an embodiment, end faces of the first supporting portion, the second supporting portion, the third supporting portion, and the fourth supporting portion facing the base are arc-shaped surfaces.

In an embodiment, a magnet mounting portion is provided on a side end face of the first supporting portion facing away from the first connecting portion, a magnet mounting portion is provided on a side end face of the third supporting portion facing away from the second connecting portion, and the magnetic blocks are respectively mounted in the magnet mounting portions.

In an embodiment, an elastic support portion is further included, the elastic support portion being arranged between the crossed assembling position of the first supporting beam and the second supporting beam and the base.

In an embodiment, the elastic support portion includes a support ring and an elastic body, the support ring being arranged at the bottom of the first supporting beam, and the elastic body abutting against a ring groove of the support ring.

In an embodiment, the base includes a plurality of lead pins, the lead pins being arranged side by side on an outer peripheral side of the base.

The technical solution provided in the embodiments of the present application achieves the following beneficial technical effects:
In the multidirectional joystick assembly provided in the embodiments of the present application, the bottom of the joystick is connected at the crossed assembling position of the first supporting beam and the second supporting beam, and the joystick can drive the first supporting beam or the second supporting beam to swing back and forth around respective axial or length directions within a certain range, achieving multidirectional movement of the joystick to provide action signals. The magnetic blocks are respectively arranged on the first supporting beam and the second supporting beam, reducing mounting structures for the magnetic blocks, comprehensively utilizing a mounting space within the multidirectional joystick assembly, thereby making an assembly structure of the multidirectional joystick assembly simpler, production more convenient, and a yield rate higher.

Additional aspects and advantages of the present application will be set forth in the subsequent section and will be better understood from the subsequent description, or may be learned by specific implementation of the present application.

### BRIEF DESCRIPTION OF THE DRAWINGS

FIG. 1 is a schematic diagram of a three-dimensional structure of a multidirectional joystick assembly according to an embodiment of the present application;
FIG. 2 is a schematic diagram of a three-dimensional structure of the multidirectional joystick assembly in an exploded state according to an embodiment of the present application;
FIG. 3 is a schematic diagram of an internal three-dimensional structure of a multidirectional joystick assembly according to an embodiment of the present application;
FIG. 4 is a schematic diagram of a partial three-dimensional structure of the multidirectional joystick assembly according to an embodiment of the present application;
FIG. 5 is a schematic diagram of a three-dimensional structure of a first supporting beam according to an embodiment of the present application;
FIG. 6 is a schematic diagram of a three-dimensional structure of a second supporting beam according to an embodiment of the present application;
FIG. 7 is a schematic diagram of a partial three-dimensional structure of the multidirectional joystick assembly according to another embodiment of the present application; and
FIG. 8 is a schematic diagram of a three-dimensional structure of a joystick according to an embodiment of the present application.

### Reference numerals:

100: base, 200: joystick, 300: first supporting beam, 400: second supporting beam, 500: magnetic block, 600: elastic support portion;
110: lead pin;
210: recess;
310: first connecting portion, 320: first supporting portion, 330: second supporting portion; 311: mounting groove, 312: connecting lug;
410: second connecting portion, 420: third supporting portion, 430: fourth supporting portion; 411: snap-fit groove;
510: magnet mounting portion;
610: support ring, 620: elastic body.

### DETAILED DESCRIPTION

To facilitate understanding of the present application, the present application will be described more fully below with reference to the relevant accompanying drawings. Possible embodiments of the present application are shown in the accompanying drawings. However, the present application may be implemented in many different forms and is not limited to the embodiments described herein with reference to the accompanying drawings. The embodiments described with reference to the accompanying drawings are exemplary, intended to make the understanding of the disclosure of the present application more thorough and comprehensive, and should not be construed as limiting the present application. In addition, if a detailed description of a known technology is unnecessary for illustrating features of the present application, these technical details may be omitted.

Those skilled in the relevant art may understand that, unless otherwise defined, all terms (including technical and scientific terms) used herein have the same meaning as commonly understood by those of ordinary skill in the art to which this present application belongs. It should also be understood that terms such as those defined in general dictionaries should be interpreted as having meanings consistent with the meanings in the prior art and may not be interpreted in an idealized or overly formal sense unless specifically defined as such herein.

Those skilled in the art may understand that, unless specifically stated otherwise, the singular forms "a", "an", "said", and "the" used herein may also include the plural forms. It should be further understood that the term "including" as used in the specification of the present application indicates presence of the described features, integers, steps, operations, elements, and/or components, but does not preclude presence or addition of one or more other features, integers, steps, operations, elements, components, and/or groups thereof. It should be understood that the term "and/or" as used herein includes all or any combination of one or more of the associated listed items.

In the prior art, magnetic blocks, generally permanent magnets, may be mounted in a multidirectional joystick to achieve resetting of the joystick under magnetic attraction. The joystick may typically move in an X-axis or Y-axis direction. To mount the magnetic blocks, corresponding mounting structures, such as two movable swing arms near the joystick, are required inside the multidirectional joystick. Due to the need to consider whether a magnetic force between the magnetic blocks and the corresponding structures on the base of the multidirectional joystick is sufficient and accurate and a very small internal space, dimensional requirements for the two parts are particularly strict during actual production, easily resulting in problems of a high production reject rate, low production efficiency, and increased costs.

The technical solution of the present application and how the technical solution solves the above technical problems are described in detail below with specific embodiments.

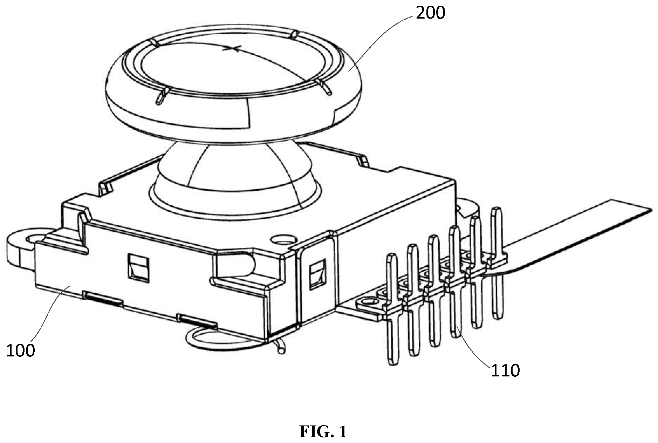

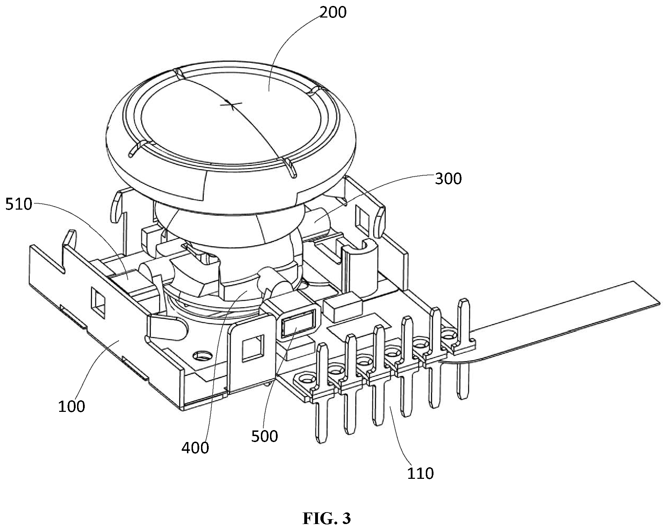

The present application provides a multidirectional joystick assembly, as shown in FIG. 1 to FIG. 4, including a base 100, a joystick 200, a first supporting beam 300, and a second supporting beam 400. The first supporting beam 300 and the second supporting beam 400 are movably arranged on the base 100. The bottom of the joystick 200 is connected at the crossed assembling position of the first supporting beam 300 and the second supporting beam 400, and the joystick 200 can drive the first supporting beam 300 or the second supporting beam 400 to reciprocate. One end of the first supporting beam 300 and one end of the second supporting beam 400 are each provided with a magnetic block 500. The first supporting beam 300 and the second supporting beam 400 are support structures for the joystick 200. The two supporting beams are interlaced with each other, typically perpendicularly. To achieve the interlacing without increasing a space in a normal direction of the two, corresponding mating structures may be preset on the two supporting beams, which will be described in detail later. The base 100 is provided with corresponding support or loading structures for components such as the first supporting beam 300, the second supporting beam 400, and the joystick 200. These structures may be specifically configured to match structures of the components such as the first supporting beam 300, the second supporting beam 400, and the joystick 200. The bottom of the joystick 200 is supported by the two supporting beams and may contact the first supporting beam 300 or the second supporting beam 400, thereby driving the first supporting beam 300 or the second supporting beam 400 to swing back and forth according to a requirement.

Magnetic blocks 500 are arranged at end portions of the first supporting beam 300 and the second supporting beam 400. The magnetic blocks 500 are typically permanent magnets and cooperate with permanent magnets or ferromagnetic structures provided on the base 100 to form magnetic attraction forces on the first supporting beam 300 and the second supporting beam 400 respectively, thereby achieving resetting of the first supporting beam 300 and the second supporting beam 400 or forming signals according to a degree of cutting of magnetic induction lines. The magnetic blocks 500 may alternatively be electromagnets.

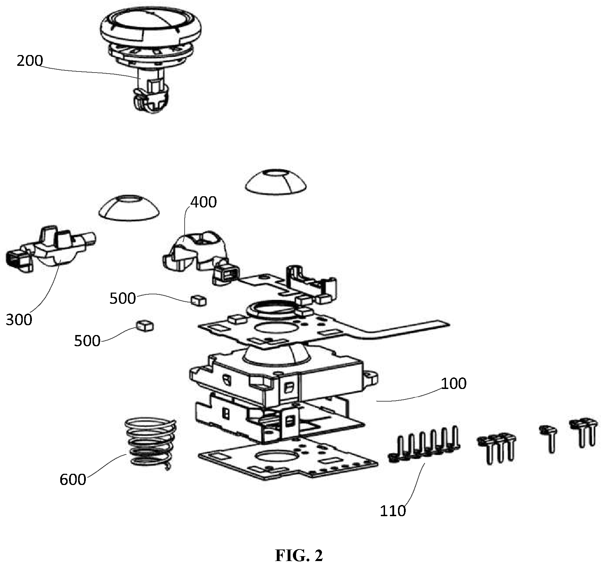

The above describes core parts of the multidirectional joystick assembly provided in the present application. In addition to the core parts, the multidirectional joystick assembly also includes corresponding matching structures, as shown in FIG. 2, such as a housing snap-connected to the base 100, a dust cover, a sensor, or a circuit board. The housing may also include a combination structure of an upper shell and a lower shell, with the base 100 mounted in the housing. The upper shell and the lower shell may be laterally pressed together to prevent reduction of the yield rate due to deformation of plastic parts caused by vertical stamping, i.e., stamping along a main axis direction of the joystick 200. The present application does not provide a further detailed description of these contents, which does not mean that the multidirectional joystick assembly provided in the present application lacks these necessary components.

In the multidirectional joystick assembly provided in the present application, the bottom of the joystick 200 is connected at the crossed assembling position of the first supporting beam 300 and the second supporting beam 400, and the joystick 200 can drive the first supporting beam 300 or the second supporting beam 400 to swing back and forth around respective axial or length directions within a certain range, achieving multidirectional movement of the joystick 200 to provide action signals. The magnetic blocks 500 are respectively arranged on the first supporting beam 300 and the second supporting beam 400, reducing mounting structures for the magnetic blocks 500, comprehensively utilizing a mounting space within the multidirectional joystick assembly, thereby making an assembly structure of the multidirectional joystick assembly simpler, production more convenient, and a yield rate higher.

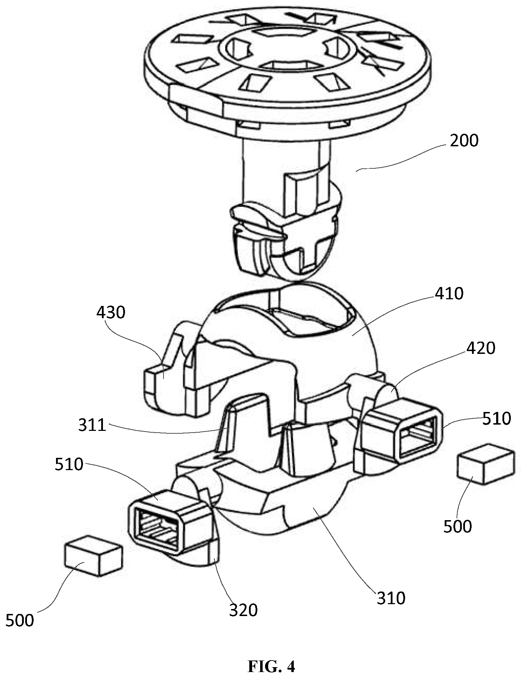

Optionally, in an embodiment of the present application, as shown in FIG. 4 to FIG. 6, the first supporting beam 300 includes a first connecting portion 310, a first supporting portion 320, and a second supporting portion 330. The first supporting portion 320 and the second supporting portion 330 are respectively arranged on two opposite sides of the first connecting portion 310. The second supporting beam 400 includes a second connecting portion 410, a third supporting portion 420, and a fourth supporting portion 430. The third supporting portion 420 and the fourth supporting portion 430 are respectively arranged on two opposite sides of the second connecting portion 410. The first connecting portion 310 and the second connecting portion 410 are crossed and assembled. For the first supporting beam 300, the first supporting portion 320 and the second supporting portion 330 enable the entire first supporting beam 300 to be supported on the base 100, specifically by supporting the middle first connecting portion 310 on the base 100. The first connecting portion 310 can contact the joystick 200. Similarly, the same also applies to the third supporting portion 420 and the fourth supporting portion 430 on the second supporting beam 400.

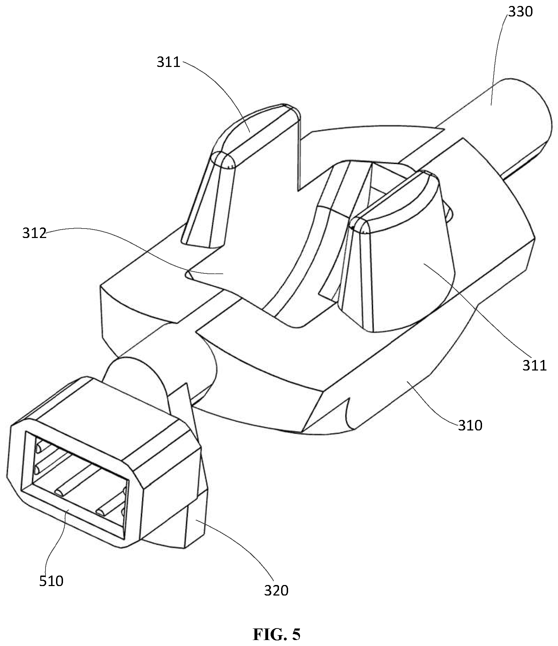

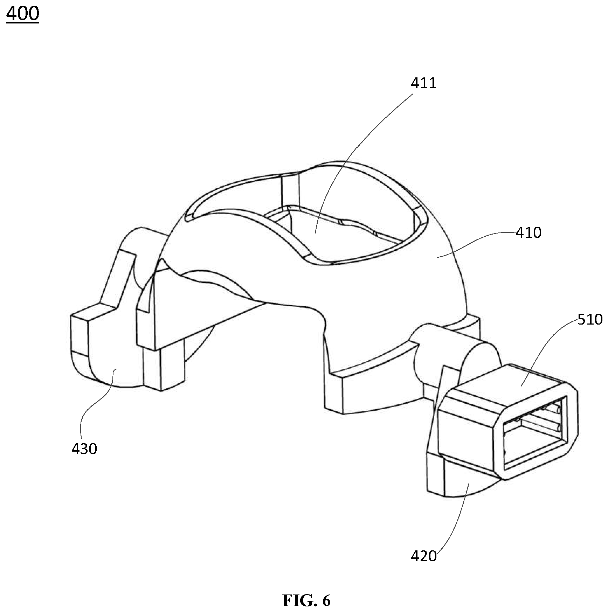

Specifically, in conjunction with the foregoing embodiments, in a specific implementation of the present application, as shown in FIG. 5 and FIG. 6, a mounting groove 311 is provided on a top end face of the first connecting portion 310. The second connecting portion 410 is provided with a snap-fit groove 411. The second connecting portion 410 is crossed and assembled with the first connecting portion 310 through the snap-fit groove 411, with a gap maintained therebetween. A through hole is provided in the bottom of the snap-fit groove 411. The bottom of the joystick 200 is disposed in the mounting groove 311 through the through hole. The mounting groove 311 may "receive" the joystick 200, allowing the joystick 200 to be stably carried on the first supporting beam 300. Meanwhile, the second connecting portion 410 is connected to the first connecting portion 310 through the snap-fit groove 411, achieving a staggered connection between the first supporting beam 300 and the second supporting beam 400 without increasing spatial occupation in the normal direction of the two. Since the joystick 200 passes through the snap-fit groove 411 through the through hole, the snap-fit groove 411 may also contact the joystick 200. When swinging left and right along a length direction of the second supporting beam 400, the joystick 200 can abut against the second supporting beam 400. A groove wall of the snap-fit groove 411 has a certain gap from an outer peripheral surface of the first connecting portion 310, so the swinging of the first supporting beam 300 and the second supporting beam 400 is independent of each other.

Optionally, in an implementation of the present application, as shown in FIG. 5, connecting lugs 312 are further provided on the top end face of the first connecting portion 310 on two opposite sides of the mounting groove 311, and the joystick 200 may abut against inner side faces of the connecting lugs 312. The arrangement of the connecting lugs 312 is to facilitate contact between the joystick 200 and the first connecting portion 310 and also to simplify the structure of the first connecting portion 310. An inner groove wall of the snap-fit groove 411 has a gap from the outwardly protruding connecting lugs 312, ensuring that movement of the first supporting beam 300 and the second supporting beam 400 may not interfere with each other.

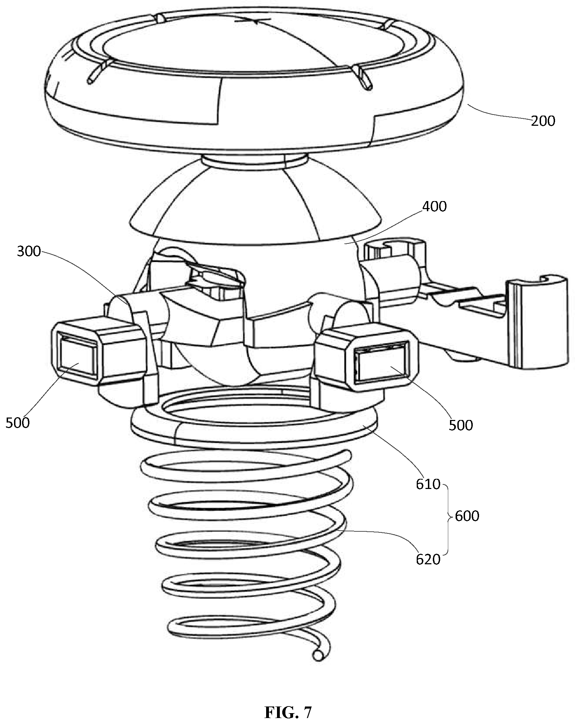

Optionally, in another embodiment of the present application, a bottom end face of the first connecting portion 310 is an arc-shaped surface, and the base 100 is provided with a support groove matching the bottom end face of the first connecting portion 310. Optionally, in conjunction with the foregoing embodiments and implementations, in certain specific implementations, as shown in FIG. 5 and FIG. 6, end faces of the first supporting portion 320, the second supporting portion 330, the third supporting portion 420, and the fourth supporting portion 430 facing the base 100 are arc-shaped surfaces. Setting the parts requiring swinging movement in an arc or circular arc shape may facilitate the swinging operation of the joystick 200, ensuring that the joystick 200 provides a user with a good operating feel. In fact, as shown in FIG. 7, the bottom of the joystick 200 is also set in a circular arc shape. A small recess 210 may be provided inwardly on a bottom end face of the joystick 200, as shown in FIG. 7, which can reduce friction-generated heat between the joystick 200 and the first connecting portion 310, facilitate heat dissipation, and reduce wear of the joystick 200.

Optionally, in yet another embodiment of the present application, as shown in FIG. 4, a magnet mounting portion 510 is provided on a side end face of the first supporting portion 320 facing away from the first connecting portion 310, a magnet mounting portion 510 is provided on a side end face of the third supporting portion 420 facing away from the second connecting portion 410, and the magnetic blocks 500 are respectively mounted in the magnet mounting portions 510.

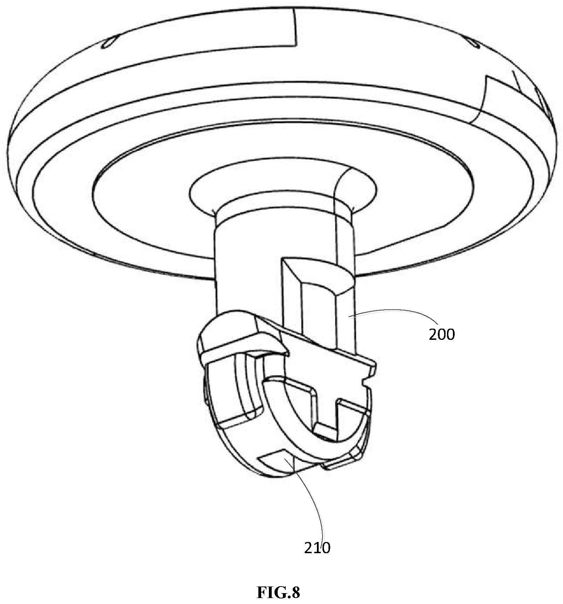

Optionally, in still another embodiment of the present application, as shown in FIG. 8, the multidirectional joystick assembly provided in the present application further includes an elastic support portion 600. The elastic support portion 600 is arranged between the crossed assembling position of the first supporting beam 300 and the second supporting beam 400 and the base 100. The elastic support portion 600 supports the first supporting beam 300, the second supporting beam 400, and the joystick 200 on the two beams, enabling the joystick 200 to swing elastically. In cooperation with the magnetic blocks 500, it is more convenient to achieve rebounding and resetting. Optionally, in conjunction with the foregoing embodiments, in a specific implementation, as shown in FIG. 8, the elastic support portion 600 includes a support ring 610 and an elastic body 620. The support ring 610 is arranged at the bottom of the first supporting beam 300, and the elastic body 620 abuts against a ring groove of the support ring 610. The elastic body 620 is generally a disc spring or a conical spring, with a large end abutting against the support ring 610 and a small end supported on the base 100.

Optionally, in an embodiment of the present application, as shown in FIG. 1 to FIG. 4, the base 100 includes a plurality of lead pins 110. The lead pins 110 are arranged side by side on an outer peripheral side of the base 100. Specifically, the lead pins 110 may be L-shaped bent pins. The lead pins 110 are arranged side by side outside the base 100 and are connected through wires to electrical components or signal components in the multidirectional joystick assembly.

Those skilled in the art may understand that the terms "first" and "second" discussed in the present application are used for descriptive purposes only and should not be understood as indicating or implying relative importance or implicitly specifying the number of indicated technical features. Thus, a feature defined with "first" or "second" may explicitly or implicitly include one or more of the feature. In the description of the present application, "a plurality of" means two or more, unless otherwise specified.

In the description of the present application, it should be noted that, unless otherwise expressly specified and limited, the terms "mounting", "connected", and "connection" should be interpreted broadly, which, for example, may be a fixed connection, a detachable connection, or an integral connection; a direct connection or an indirect connection through an intermediate medium; or internal communication between two elements. For those of ordinary skill in the art, specific meanings of the above terms in the present application can be understood according to specific circumstances.

In the description of this specification, specific features, structures, materials, or characteristics may be combined in any suitable manner in any one or more embodiments or examples.

The above description are merely some embodiments of the present application. It should be noted that for those of ordinary skill in the art, several improvements and modifications may also be made without departing from the principles of the present application. These improvements and modifications should also be regarded as the protection scope of the present application.

## Claims

1. A multidirectional joystick assembly, comprising a base, a joystick, a first supporting beam, and a second supporting beam; wherein the first supporting beam and the second supporting beam are movably arranged on the base;
the bottom of the joystick is connected to the crossed assembling position of the first supporting beam and the second supporting beam, and the joystick is capable of driving the first supporting beam or the second supporting beam to swing back and forth; and
one end of the first supporting beam and one end of the second supporting beam are each provided with a magnetic block.

2. The multidirectional joystick assembly according to claim 1, wherein the first supporting beam comprises a first connecting portion, a first supporting portion, and a second supporting portion, the first supporting portion and the second supporting portion being respectively arranged on two opposite sides of the first connecting portion; and the second supporting beam comprises a second connecting portion, a third supporting portion, and a fourth supporting portion, the third supporting portion and the fourth supporting portion being respectively arranged on two opposite sides of the second connecting portion; the first connecting portion and the second connecting portion being crossed and assembled.

3. The multidirectional joystick assembly according to claim 2, wherein a mounting groove is provided on a top end face of the first connecting portion; the second connecting portion is provided with a snap-fit groove, the second connecting portion is crossed and assembled with the first connecting portion through the snap-fit groove, a through hole is provided in the bottom of the snap-fit groove, and the bottom of the joystick is disposed in the mounting groove through the through hole.

4. The multidirectional joystick assembly according to claim 3, wherein connecting lugs are further provided on the top end face of the first connecting portion on two opposite sides of the mounting groove, and the joystick is capable of abutting against inner side faces of the connecting lugs.

5. The multidirectional joystick assembly according to claim 3, wherein a bottom end face of the first connecting portion is an arc-shaped surface, and the base is provided with a support groove matching the bottom end face of the first connecting portion.

6. The multidirectional joystick assembly according to claim 2, wherein end faces of the first supporting portion, the second supporting portion, the third supporting portion, and the fourth supporting portion facing the base are arc-shaped surfaces.

7. The multidirectional joystick assembly according to claim 2, wherein a magnet mounting portion is provided on a side end face of the first supporting portion facing away from the first connecting portion, a magnet mounting portion is provided on a side end face of the third supporting portion facing away from the second connecting portion, and the magnetic blocks are respectively mounted in the magnet mounting portions.

8. The multidirectional joystick assembly according to claim 1, further comprising an elastic support portion, the elastic support portion being arranged between the crossed assembling position of the first supporting beam and the second supporting beam and the base.

9. The multidirectional joystick assembly according to claim 8, wherein the elastic support portion comprises a support ring and an elastic body, the support ring being arranged at the bottom of the first supporting beam, and the elastic body abutting against a ring groove of the support ring.

10. The multidirectional joystick assembly according to claim 1, wherein the base comprises a plurality of lead pins, the lead pins being arranged side by side on an outer peripheral side of the base.
